Europäisches Patentamt

European Patent Office

Office européen des brevets

Publication number: **0 283 610**
**A1**

# EUROPEAN PATENT APPLICATION

Application number: 87302667.8

Int. Cl.⁴ **G06F 11/22** , G06F 11/32

Date of filing: 27.03.87

Date of publication of application:
**28.09.88 Bulletin 88/39**

Designated Contracting States:
**AT BE CH DE ES FR GB GR IT LI LU NL SE**

Applicant: **Hewlett Packard Ltd**
**Nine Mile Ride**
**Wokingham, Berkshire RG11 3LL(GB)**

Inventor: **Paterson, Eric Paul**
**19 Grange Road**
**Edinburgh EH9 1UQ(GB)**
Inventor: **Moule, Anthony William**
**21 Viewforth Gardens**
**Edinburgh EH10 4ET(GB)**

Representative: **Smith, Norman Ian et al**
**F.J. CLEVELAND & COMPANY 40-43**
**Chancery Lane**
**London WC2A 1JQ(GB)**

**Improvements in or relating to the testing of electronic equipment.**

Processing apparatus is provided with a facility which enables it to carry out a series of test sequences on its components. The facility can display on the display 11 of the instrument a diagrammatic plan of the layout of the major components of the instrument. The display can be operated to indicate which component is currently being tested, which have been tested, which have passed a test and which have failed. The components can be shown on the display in positions corresponding substantially to their physical position on a circuit board thereby simplifying location of a faulty component.

FIG.1

## IMPROVEMENTS IN OR RELATING TO THE TESTING OF ELECTRONIC EQUIPMENT

This invention relates to signal processing apparatus and in particular to the testing of such apparatus.

It is known to provide digital processing apparatus with internal testing facilities. Typically an operator can initiate a test sequence by operating one or more keys on a keyboard on the front panel of the apparatus. Conventionally when such tests are carried out the result is displayed to the operator as a pass or a fail or in some cases may take the form of continuously cycling a test and displaying the number of passes and the number of fails.

The present invention is concerned with an improvement in internal testing facilities which enhances fault finding.

According to the present invention there is provided processing apparatus having a display means and a processing capability said processing capability including the facility for operating one or more test sequences for testing components of the apparatus and the display means being capable of displaying one or more component layouts whereby defective components identified by a said test sequence can be indicated on said display means. In such an apparatus an operator, in addition to being informed that a component or components are faulty, is provided with a visual indication of the location of any defective component. Thus the fault can be located quickly by a user even though that user may not be familiar with the particular component layout of the apparatus.

The invention will be described now by way of example only with particular reference to the accompanying drawings . In the drawings:

Figure 1 is a front view of digital test equipment;

Figure 2 is a block diagram showing the component layout of the digital test equipment, and

Figures 3 to 9 are schematic views of CRT displays which are generated during operation of apparatus in accordance with the present invention.

The invention will be described with reference to a digital data test apparatus which can run a series of tests on digital transmission links. The way in which the apparatus carries out these functions is not important for an understanding of the present invention and will therefore not be described.

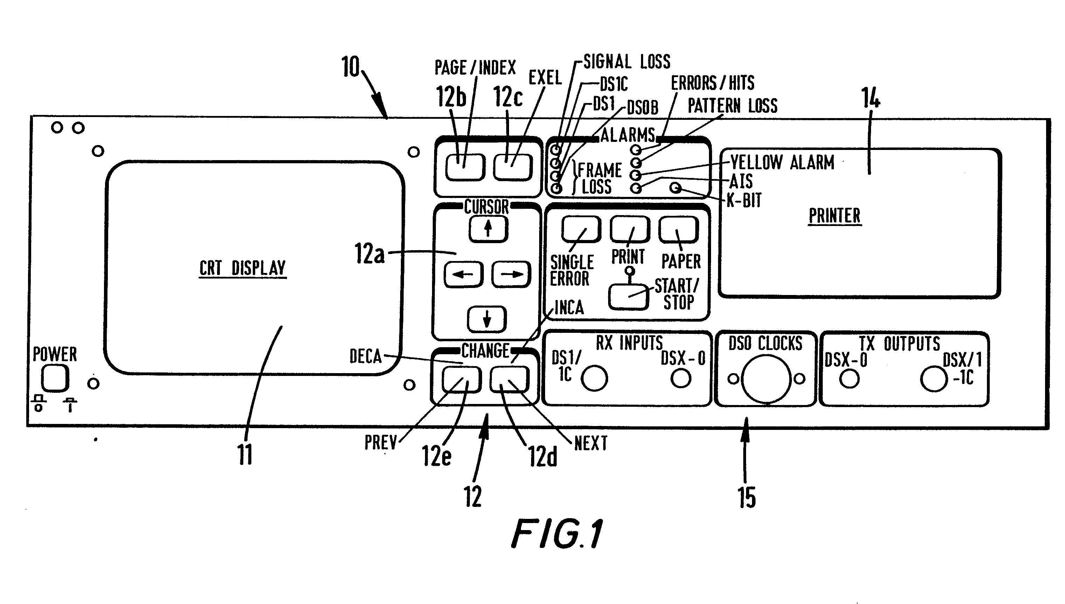

Such an apparatus has electronic circuitry located with a housing the housing having a front panel 10 of the form shown in figure 1. The front panel includes a cathode ray tube display 11, a plurality of function keys, the keys being shown generally at 12, a printer 14, and input and output sockets shown generally at 15.

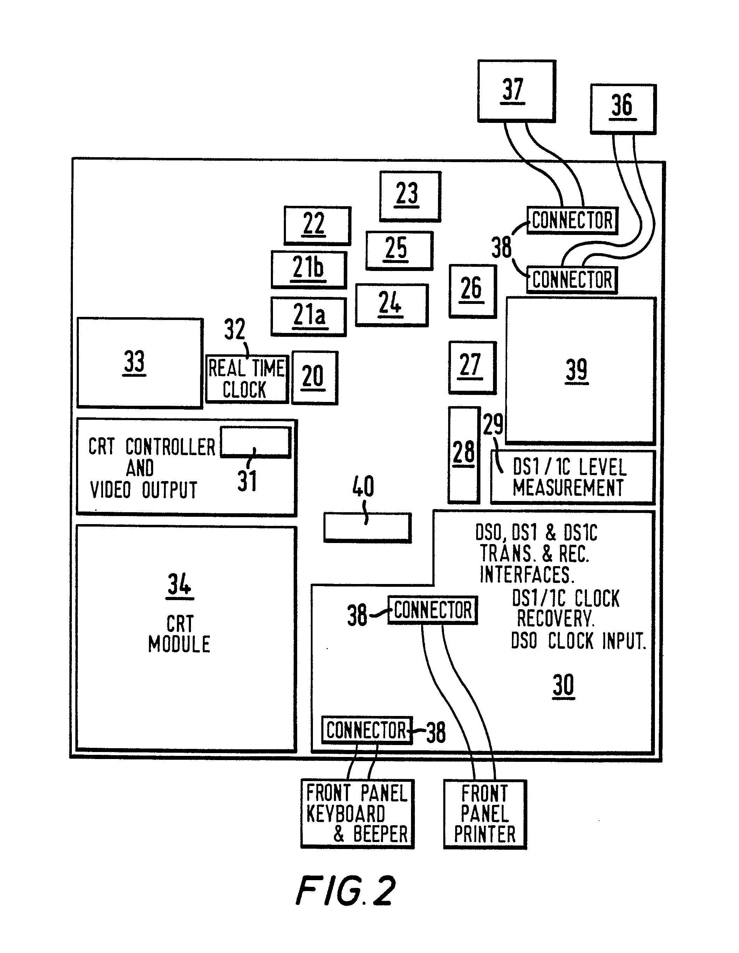

Within the housing there is contained a circuit board on which are mounted the components of the test apparatus. A schematic view of these components is shown in figure 2. The components and their operation will not be described in detail but simply listed so that their positions on the board can be appreciated. The components include a control processor 20, control processor EPROMs 21a, 21b, a control processor RAM 22, a DSO processor 23, a DSO EPROM 24, a DSO RAM 25, a DSIC Gate array 26, a DSI Gate Array 27, a PATTERN Gate Array 28, a level measurement circuit 29, interface and clock circuits 30, CRT Controller 31, Clock Circuitry 32, power fail detection and backup circuitry 33, a cathode ray tube module 34, a front panel keyboard beeper 35, jitter measurement circuitry 36, protocol analyser interfaces 37, phase locked loop circuitry 39 a keyboard and printer controller 40 and various connectors 38. The processors 20,23 can each be implemented using an Intel 80188, the EPROMS 21a, 21b and 24 can be 1M bit 27010 devices (128K $\times$ 8 bits wide), the RAM 22 can be a 62256 (32K byte), the RAM 25 can be a 6264 (8K byte), the clock 32 can be an Intersil ICM 7170, the controller 31 can be an Intel 8275 and the controller 40 an Intel UP1 8742. It will be appreciated that some of the blocks shown on Figure 2 comprise a number of circuit elements.

The above is a list, not necessarily exhaustive, of components which may require testing by an operator of the equipment. In the present arrangement a series of test sequences are stored in the memory associated with the control processor 20 so that the control processor can operate such test sequences when instructed to do so by an operator. In addition the apparatus can display on its cathode ray tube a plan of the components shown in figure 2. As the test sequences are run the software is arranged to highlight visually any component which is found to be defective as a result of the test sequence. For example, if the DSIC Gate Array was found to be defective the brightness of the boundary of this item on the display could be increased in order to highlight it. Alternatively it could be made to flash. Thus in addition to the test sequence advising an operator of a defective component it can also indicate to the operator the position of the defective component on the circuit board. This can be an important time saving feature particularly if the operator is not familiar with the component layout.

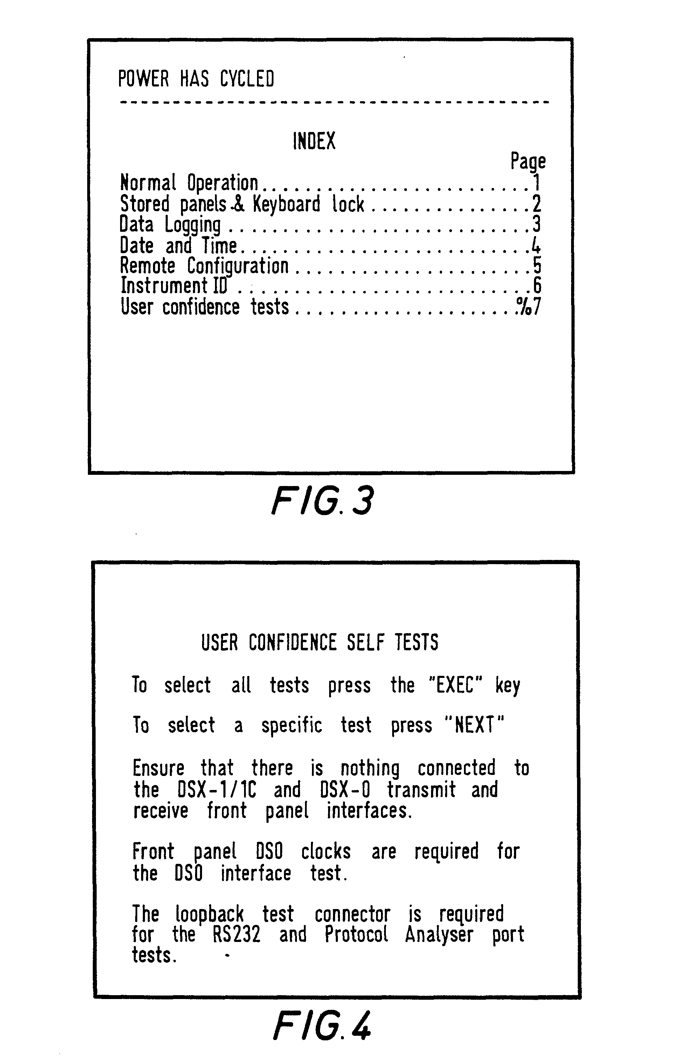

The various displays which can be obtained with the present embodiment will now be described with

2

reference to Figures 3 to 9. It will be appreciated that it is not possible to reproduce exactly the display of a cathode ray tube and various symbols have been used to indicate the particular features. For example, the percent symbol (%) represents the position of the cursor on the display. Areas of the display surrounded by asterisks in the Figures indicate areas represented by inverse video. It is also possible to use special graphics, characters and features in order to highlight areas of the display.

When an operator of the instrument wishes to carry out the series of internal tests he is initially presented with an index page shown in Figure 3. The particular tests are described on the index as user confidence tests so that these can be selected by positioning the cursor by operation of the cursor key 12a shown on the front panel 10 (Figure 1) against the page 7 field and then pressing the page/index key 12b also shown on the front panel 10. The user is then presented with the display shown in Figure 4 which gives instructions on how to select tests which will generate a display of the component layout. To select all tests the user presses the EXEC key 12c shown on the front panel 10. Alternatively the NEXT key 12d can be pressed to select a specific test as indicated on the display. If the page/index key 12b is pressed the system returns to the index page.

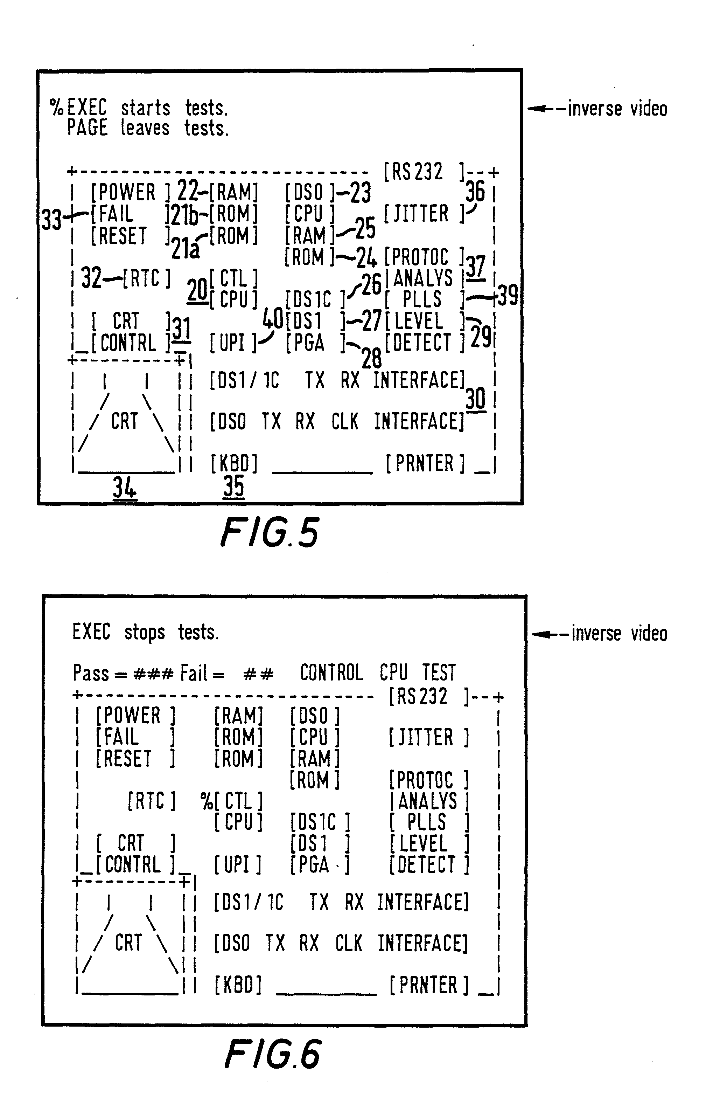

Assuming that the EXEC key is pressed then the user is presented with a display of the form shown in Figure 5. On this display are shown the various components which can be tested by the test sequence the components being shown more or less in their actual physical position on the circuit board. This can be seen by a comparison with Figure 2 Reference numerals corresponding to those of Figure 2 have been inserted on Figure 5 by the corresponding components. When the EXEC key 12c is pressed the test sequence is initiated and it sequences through the various testable components in a pre-determined logical order. For example crucial items such as the control processor and display system are tested first and the user interfaces tested last. If a particular item under test passes that test, the box displayed on the CRT 11 which represents that item will be shown inverse video. A fail will be represented by the box being displayed as flashing inverse video.

The operator may pause sequencing at any point by pressing the EXEC key 12c, (eg the pause will take effect after the current test has finished). Pressing the page/index key 12b causes the system to exit from the user confidence test and the index page is displayed with the cursor on the page 1 field. Alternatively if the EXEC key 12c is pressed again the test sequence continues its operation.

Operator intervention may be required at the following stages of a test sequence. For a cathode ray tube controller test the EXEC key has to be pressed in order to bring up the cathode ray tube test display. If the PREV key 12e is now pressed this brings up cathode ray tube alignment display whilst pressing the NEXT key 12d will restore the original test display. Pressing EXEC again resumes the sequencing of the test.

For a keyboard test any key can be pressed and its name displayed on the cathode ray tube. The front panel and internal monitor LEDs are flashed and a beeper sounded. Pressing the EXEC key causes the same for an instant and then sequencing of tests resumes.

For an RS 232 loop back test the operator is prompted to connect a special connector to an RS 232 port on the rear of the instrument and then to press the EXEC key in order to carry out the test.

For a DSO interface test the operator is prompted to ensure that valid DSO bit and byte clocks are connected at the front panel and then to press the EXEC Key in order to effect the test.

For a protocol port test the operator is prompted to fit a special connector to the protocol analyser port and then to press the EXEC key as before.

For a power fail test the current time is displayed and the operator is prompted to cycle the power. When power is restored the display will show the current time and the last power down time.

Figure 6 shows an example of a display when the control processor test is in action. The current display informs the operator that he may pause sequencing by pressing the EXEC key. This message is shown on the top line of the display and is represented in inverse video. On the third line down is shown a reminder that steady inverse video around a tested item indicates a pass and blinking inverse video represents a fail.

In this respect it should be noted that as it is not possible to represent a cathode ray display precisely the ## represents three blinking spaces and ### represents three steady inverse video spaces.

The cursor is then placed on the item being tested and a message on the third line down informs the user of the current test being undertaken.

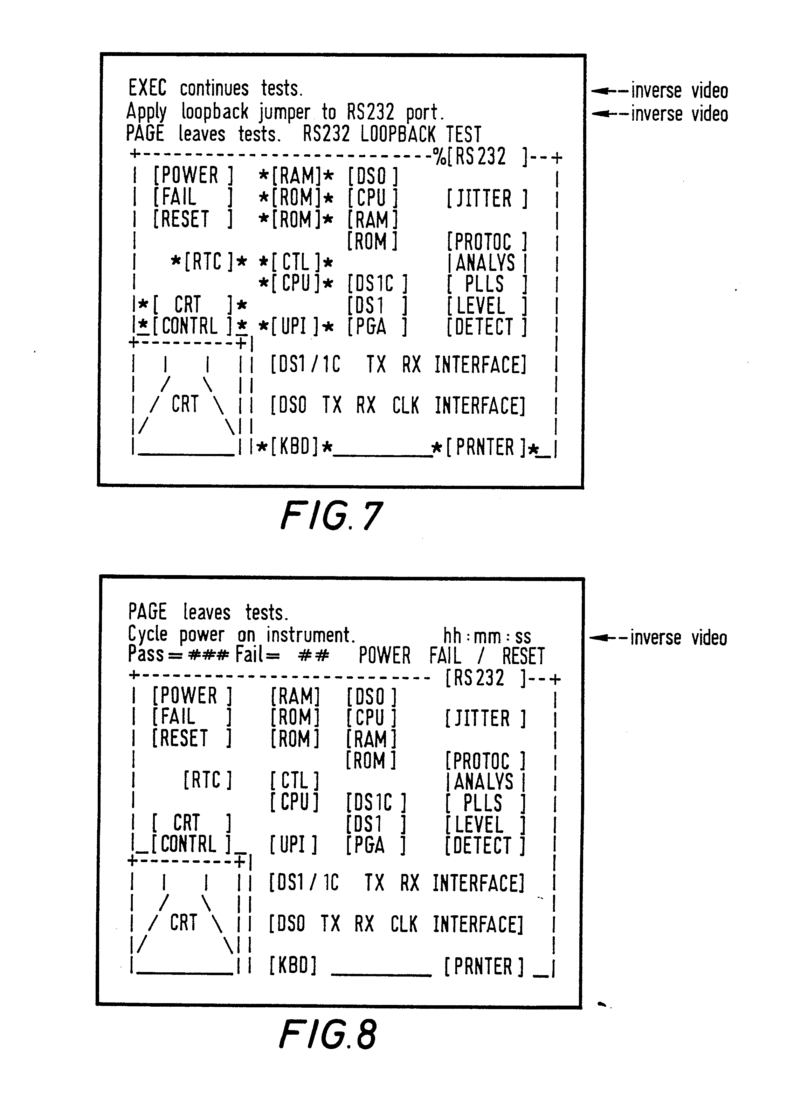

Figure 7 illustrates the display for an RS 232 test. At certain points during the test sequence operator intervention is required. As shown in Figure 7 the instrument is currently waiting for the user to ensure that the loop back connector is applied to the RS 232 port which is on the rear panel of the instrument. When the connector is in place the user presses the EXEC key to continue the test. In the display the tests that have already been carried out are indicated by items having asterisks on either side of them. On the actual instrument these items would be displayed in steady inverse video. Any item found to fail a test would again be displayed by flashing inverse video.

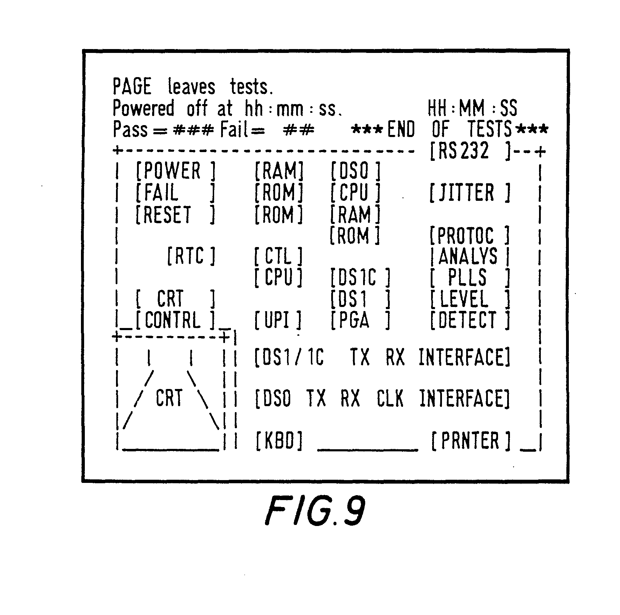

The display for a power fail/reset test is shown in Figure 8. This is usually the last test to be performed and is the power fail/battery backup/power up reset test. As shown the current time is displayed on the second line of the screen display at HH: MM: SS. This is updated once per second. The user is instructed to cycle the power on the instrument and if this test is passed, then a second display shown in Figure 9 is generated. This shows the time at power off in the same way and the current time. It should be noted that at this stage if all items have passed their test then all would be shown in inverse video.

The necessary software stored in the memory of the control processor for operating the above tests and other tests is summarised in the attached flow charts.

4

## FLOW CHARTS DETAILING OPERATION

```
      ...........................
      ( ENTRY FROM INDEX PAGE )
      ...........................
                  |
                  V
   /.......................\        Y        +..............................+
  / Instrument gating, remote \...........>| Display message and exit     |
  \ or keyboard locked    ?   /             +..............................+
   \........................./
                  |
                  | N
                  V
   +.................................+
   | Display introduction message    |
   +.................................+
                  |
                  V
      /...............\       "P"     +......+
     /   Wait for      \..........>| Exit |
    < "PAGE" or "EXEC"  >           +......+  +..........................+
     \ or "NEXT" key   /...........................>| Do "specific tests"  |
      \.............../       "N"                    +..........................+
                  |
                  | "E"
                  V
   +...............................+
   | Display component placement|
   | and start/leave message    |
   +...............................+
                  |
                  V
      /...............\        N         +...........................+
     /  Is jitter option \...................>| Blank out [JITTER] box|
     \   present  ?      /                     | on component display  |
      \.............../                        +...........................+
                  |                                       |
                  | Y                                     |
                  |<...................................... |
                  V
      /...............\       "P"                    +......+
     / Wait for "PAGE" \.....................................>| Exit |
     \  or  "EXEC" key /                                     +......+
      \.............../
                  |
                  | "E"
                  V
```

```
                                    |
                                    V
          +-----------------------------+
          | Cursor on Control Processor, |
          | "Stop" message on line 1,    |
          | "CONTROL CPU TEST" on line 3,|
          | "Pass/fail" message on line 3|
          +-----------------------------+
                          |
                          V
              /------------------\        F
             /  Control CPU test  \--------------------->| Blinking inverse video|
             \  pass or fail  ?   /                      | around [CTL] box      |
              \------------------/                       |        [CPU]          |
                          |                              +-----------------------+
                          | P                                        |
                          V                                          |
          +--------------------------+                               |
          | Steady  inverse video    |                               |
          | around [CTL] box         |                               |
          |         [CPU]            |                               |
          +--------------------------+                               |
                          |<---------------------------------------+
                          V
              /------------------\        Y
             /      "EXEC"        \--------------------->| Display "EXEC continues" |
             \   key pressed  ?   /                      | and "PAGE leaves tests"  |
              \------------------/                       +--------------------------+
                          |                                          |
                          | N                                        V
                          |                   "E"        /------------------\
                          |<------------------------------/ Wait for "PAGE"  \
                          |                              \  or  "EXEC" key    /
                          |                               \------------------/
                          |                                          |
                          |                                          | "P"
                          |                                          V
                          |                                      +-------+
                          |                                      | Exit  |
                          V                                      +-------+
```

```
                              |
                              |
                              V
      +----------------------------------------+
      | Cursor on 1st Ctrl CPU [ROM],          |
      | "Stop" message on line 1,              |
      | "CONTROL CPU EPROM'S" on line 3,       |
      | "Pass/fail" message on line 3          |
      +----------------------------------------+
                              |
                              |
                              V
         /-------------------\       F        +---------------------------+
        / Control ROM test    \--------------->| Blinking inverse video    |
        \ pass or fail  ?     /                | around [ROM] box          |
         \-------------------/                 +---------------------------+
                   |                                       |
                   | P                                     |
                   V                                       |
      +---------------------------+                        |
      | Steady  inverse video     |                        |
      | around [ROM] box          |                        |
      +---------------------------+                        |
                   |                                       |
                   |<--------------------------------------+
                   V
         /-------------------\       Y        +---------------------------+
        /     "EXEC"          \--------------->| Display "EXEC continues"  |
        \  key pressed  ?     /                | and "PAGE leaves tests"   |
         \-------------------/                 +---------------------------+
                   |                                       |
                   | N                                     |
                   |                                       V
                   |                     "E"       /------------------\
                   |<----------------------------/  Wait for "PAGE"    \
                   |                             \  or  "EXEC" key     /
                   |                              \------------------/
                   |                                       |
                   |                                       | "P"
                   V                                       V
                                                      +-------+
                                                      | Exit  |
                                                      +-------+
```

```
                              |
                              |
                              V
        +-------------------------------------+
        | Cursor on 2nd Ctrl CPU [ROM],       |
        | "Stop" message on line 1,           |
        | "CONTROL CPU EPROM'S" on line 3,    |
        | "Pass/fail" message on line 3       |
        +-------------------------------------+
                              |
                              |
                              V                                   +-------------------------+
              /-----------------\           F                  >| Blinking inverse video  |
             /  Control ROM test  \ - - - - - - - - - - - - - - | around [ROM] box         |
             \  pass or fail  ?   /                              +-------------------------+
              \-----------------/                                            |
                      |                                                      |
                      | P                                                    |
                      V                                                      |
        +----------------------------+                                       |
        | Steady  inverse video      |                                       |
        | around [ROM] box           |                                       |
        +----------------------------+                                       |
                      |<- - - - - - - - - - - - - - - - - - - - - - - - - - -+
                      V
              /-----------------\           Y                  +----------------------------+
             /     "EXEC"         \ - - - - - - - - - - - - - >| Display "EXEC continues"   |
             \  key pressed  ?   /                             | and "PAGE leaves tests"    |
              \-----------------/                              +----------------------------+
                      |                                                      |
                      | N                                                    |
                                    "E"                                      V
                      |<- - - - - - - - - - - - - - - -/-----------------\
                      |                                / Wait for "PAGE"   \
                      |                                \  or  "EXEC" key   /
                      |                                 \-----------------/
                      |                                          |
                      |                                          | "P"
                      |                                          V
                      |                                     +-------+
                      |                                     | Exit  |
                      V                                     +-------+
```

```
                                 |
                                 |
                                 V
           +..............................+
           | Cursor on Ctrl CPU [RAM],     |
           | "Stop" message on line 1,     |
           | "CONTROL CPU RAM" on line 3,  |
           | "Pass/fail" message on line 3 |
           +..............................+
                                 |
                                 |
                                 V
              /...............\      F                +........................+
             / Control RAM test \.................... >| Blinking inverse video|
             \  pass or fail  ? /                      | around [RAM] box       |
              \.............../                        +........................+
                                 |                                 |
                                 | P                               |
                                 V                                 |
           +.....................+                                 |
           | Steady  inverse video |                               |
           | around [RAM] box      |                               |
           +.....................+                                 |
                                 |                                 |
                                 |<................................+
                                 V
              /...............\      Y                +...........................+
             /    "EXEC"         \.................. >| Display "EXEC continues"   |
             \  key pressed  ?   /                    | and "PAGE leaves tests"    |
              \.............../                        +...........................+
                                 |                                 |
                                 | N                               |
                                 |                                 V
                                 |    "E"           /...............\
                                 |<................/ Wait for "PAGE"  \
                                 |                 \  or  "EXEC" key   /
                                 |                  \.............../
                                 |                                 |
                                 |                                 | "P"
                                 |                                 V
                                 |                              +......+
                                 V                              | Exit |
                                                                +......+
```

```
                              |
                              |
                              V
    +.............................+
    | Cursor on [ CRT   ]         |
    |           [CONTRL]          |
    | "Stop" message on line 1,   |
    | "CRT CONTROLLER TEST" on line 3,|
    | "Pass/fail" message on line 3 |
    +.............................+
                     |
                     |
                     V
            /-----------------\          F
           / Crt control test  \.................................>| Blinking inverse video|
           \ pass or fail  ?   /                                  | around [ CRT   ] box  |
            \-----------------/                                   |         [CONTRL]      |
                     |                                            +.......................+
                     | P                                                    |
                     V                                                      |
    +.......................+                                               |
    | Steady  inverse video |                                               |
    | around [ CRT  ] box   |                                               |
    |          [CONTRL]     |                                               |
    +.......................+                                               |
                     |<.......................................................+
                     V
            /-----------------\          Y
           /      "EXEC"       \.................................>| Display "EXEC continues" |
           \  key pressed  ?   /                                  | and "PAGE leaves tests"  |
            \-----------------/                                   +..........................+
                     |                                                       |
                     | N                                                     |
                     |                                                       V
                     |                              "E"       /-----------------\
                     |<............................../ Wait for "PAGE"  \
                     |                                \ or  "EXEC" key   /
                     |                                 \-----------------/
                     |                                          |
                     |                                          | "P"
                     |                                          V
                     |                                    +-------+
                     V                                    | Exit  |
                                                          +-------+
```

```
                    |
                    |
                    V
          /---------------\      "P"                           +------+
         /  Wait for "PAGE" \---------------------------------->| Exit |
         \  or  "EXEC" key  /                                   +------+
          \---------------/
                    |
                    | "E"
                    V
     +--------------------------------+
     | Save current display and full  |
     | full character set on screen   |
     | and display "EXEC continues"   |
     +--------------------------------+
                    |
                    |<--------------+
                    V               |
          /---------------\    N    |
         /     Wait for    \--------+
         \    "EXEC" key   /
          \---------------/
                    |
                    | Y
                    V
```

```
                                  |
                                  |
                                  V
         +---------------------------------------+
         | Restore previous display,             |
         | Cursor on [KBD],                      |
         | "EXEC exits kbd test" on line 1,      |
         | "Press any key" on line 2,            |
         | "UPI - KEYBOARD TEST" on line 3,      |
         | "Pass/fail" message on line 3         |
         +---------------------------------------+
                                  |<....................+....+
                                  V                     |    |
                        /..................\   N        |    |
                       /      Wait for       \........+  |    |
                       \      any  key       /          |    |
                        \................../             |    |
                                  |                      |    |
                                  | Y                    |    |
                                  V                      |    |
         +---------------------------------------+       |    |
         | Display key's name on line 2,         |       |    |
         | Flash front panel LED's,              |       |    |
         | Beep front panel beeper,              |       |    |
         | Wait 1/2 second                       |       |    |
         +---------------------------------------+       |    |
                                  |                      |    |
                                  |                      |    |
                                  V                      |    |
                        /..................\   N         |    |
                       /   Was last key      \...........+    |
                       \      "EXEC"  ?      /                 |
                        \................../
                                  |
                                  | Y
                                  V
              +-----------------------------+
              | Steady  inverse video |
              | around [KBD] box      |
              +-----------------------------+
                                  |
                                  |
                                  V
```

```
                         |
                         V
        +..........................+
        | Cursor on [PRNTER],      |
        | "Stop" message on line 1,|
        | "UPI - PRINTER TEST" on line 3, |
        | "Pass/fail" message on line 3 |
        +..........................+
                    |
                    |
                    V
            /................\        F          +........................+
           /  Printer test    \...................>| Blinking inverse video|
           \  pass or fail  ? /                     | around [PRNTER] box    |
            \................/                      +........................+
                    |                                       |
                    | P                                     |
                    V                                       |
        +...................+                               |
        | Steady  inverse video |                           |
        | around [PRNTER] box   |                           |
        +...................+                               |
                    |                                       |
                    |<......................................+
                    V
        +...................+
        | Steady  inverse video |
        | around [UPI] box      |
        +...................+
                    |
                    |
                    V
            /...............\        Y          +...............................+
           /     "EXEC"       \...................>| Display "EXEC continues"    |
           \  key pressed  ?  /                     | and "PAGE leaves tests"     |
            \.............../                       +...............................+
                    |                                       |
                    | N                                     |
                    |                                       V
                    |              "E"         /...............\
                    |<........................./  Wait for "PAGE" \
                    |                           \  or  "EXEC" key  /
                    |                            \.............../
                    |                                    |
                    |                                    | "P"
                    |                                    V
                    |                                 +------+
                    |                                 | Exit |
                    V                                 +------+
```

```
                              |
                              |
                              V
        +--------------------------------------+
        | Cursor on [RTC],                     |
        | "Stop" message on line 1,            |
        | "REAL TIME CLOCK TEST" on line 3|
        | "Pass/fail" message on line 3        |
        +--------------------------------------+
                              |
                              |
                              V
            /----------------\        F                +------------------------+
           / RTC test         \..........................>| Blinking inverse video|
           \  pass or fail  ?  /                          | around [RTC] box       |
            \----------------/                            +------------------------+
                    |                                                  |
                    | P                                                |
                    V                                                  |
        +------------------------+                                     |
        | Steady  inverse video  |                                     |
        | around [RTC] box       |                                     |
        +------------------------+                                     |
                    |                                                  |
                    |<................................................+
                    V
            /----------------\        Y                +----------------------------+
           /      "EXEC"       \........................>| Display "EXEC continues"   |
           \  key pressed  ?   /                          | and "PAGE leaves tests"    |
            \----------------/                            +----------------------------+
                    |                                                  |
                    | N                                                |
                    |                                                  V
                    |                    "E"              /--------------------\
                    |<................................../ Wait for "PAGE"       \
                    |                                    \  or  "EXEC" key       /
                    |                                     \--------------------/
                    |                                                  |
                    |                                                  | "P"
                    |                                                  V
                    |                                              +-------+
                    |                                       r      | Exit  |
                    V                                              +-------+
```

```
                         |
                         V
      +...............................+
      |  Cursor on [Rs232],           |
      |  "Continue" message on line 1,|
      |  "Apply connector" msg on line 2,|
      |  "RS232 LOOPBACK TEST" on line 3,|
      |  "Pass/fail" message on line 3 |
      +...............................+
                         |
                         V
         /...............\        "P"                       +......+
        /  Wait for "PAGE" \...........................>| Exit |
        \   or  "EXEC" key /                              +......+
         \.............../
                         |  "E"
                         V
         /...............\        F            +.........................+
        /  RS232 test      \......................>| Blinking inverse video|
        \  pass or fail  ? /                       |  around [RS232] box   |
         \.............../                         +.........................+
                         |                                    |
                         | P                                  |
                         V                                    |
      +.................+                                     |
      | Steady  inverse video |                               |
      | around [RS232] box |                                  |
      +.................+                                      |
                         |                                     |
                         |<....................................+
                         V
         /...............\        Y            +.........................+
        /     "EXEC"       \......................>| Display "EXEC continues" |
        \  key pressed .?  /                       |  and "PAGE leaves tests" |
         \.............../                         +.........................+
                         |                                    |
                         | N                                  V
                         |                     "E"   /...............\
                         |<........................./  Wait for "PAGE" \
                         |                           \   or  "EXEC" key /
                         |                            \.............../
                         |                                    |
                         |                                    | "P"
                         |                                    V
                         |                               +......+
                         |                               | Exit |
                         V                               +......+
```

```
                      |
                      |
                      V
        +..............................+
        | Cursor on [PGA],             |
        | "Stop" message on line 1,    |
        | "PATTERN GATE ARRAY" on line 3, |
        | "Pass/fail" message on line 3 |
        +..............................+
                      |
                      |
                      V
         /.................\       F              +.......................+
        /  PGA test          \.................->| Blinking inverse video|
        \  pass or fail  ?   /                    | around [PGA] box       |
         \.................../                     +.......................+
                      |                                       |
                      | P                                     |
                      V                                       |
        +.....................+                               |
        | Steady  inverse video |                             |
        | around [PGA] box    |                               |
        +.....................+                               |
                      |                                       |
                      |<......................................+
                      V
         /.................\       Y              +.......................+
        /     "EXEC"         \.................->| Display "EXEC continues" |
        \  key pressed  ?    /                    | and "PAGE leaves tests" |
         \.................../                     +.......................+
                      |                                       |
                      | N                                     |
                      |                                       V
                      |                "E"       /.................\
                      |<........................./  Wait for "PAGE"  \
                      |                          \  or  "EXEC" key   /
                      |                           \................./
                      |                                   |
                      |                                   | "P"
                      |                                   V
                      |                              +......+
                      |                              | Exit |
                      V                              +......+
```

And so on for the [DS1 ], [DS1C], [DS0][CPU], [DS1/1C TX RX INTERFACE], [DS0 TX RX CLK INTERFACE], [PROTOC]|ANALYS|[ PLLS ], [LEVEL ][DETECT] and [JI1TER] tests. And finally, the power fail test:

```
                          |
                          |
                          V
+---------------------------------+
| Cursor on [POWER],              |
| "Page leaves"  on line 1,       |
| "Cycle Power" on line 2,        |
| "POWER FAIL /RESET" on line 3,  |
| "Pass/fail" message on line 3   |
| Save test display               |
+---------------------------------+
                          |
                          |
                          V
+---------------------------------+
| Set power down test flag, so we |
| return to test display on next  |
|          power up               |
+---------------------------------+                 +------------------------------------+
                          |                          | This loop is broken when the       |
                          |                          | user cycles the power on the       |
                          |<-------------------------+ instrument. After power up         |
                          |                          | initialisation execution resumes|
                          |                          | from the next flow chart           |
                          |                          +------------------------------------+
                          |                                            ^
                          |                                            |
                          V                                            |
            /-----------------\     N           +------------------------------------+
           /    "PAGE"          \--------------->| Update current time (hh:mm:ss)     |
           \   key pressed  ?   /                | on line 2 of screen                |
            \-----------------/                  +------------------------------------+
                          |
                          | Y
                          V
      +-----------------------------+
      | Clear power down test flag  |
      +-----------------------------+
                          |
                          |
                          V
                    +-------+
                    | Exit  |
                    +-------+
```

```
        .........................
        ( ENTRY AFTER POWER CYCLE )
        .........................
                    |
                    |
                    V
   +-----------------------------------+
   | Restore test display              |
   | "PAGE leaves " message on line 1  |
   | "Powered off at" on line 2 with   |
   | Power fail time (hh:mm:ss)  and   |
   | Current time (HH:MM:SS).          |
   | "*** END OF TESTS ***" on line 3  |
   | "Pass/fail" message on line 3     |
   +-----------------------------------+
                    |
                    |
                    V
        +---------------------------+
        | Steady  inverse video |
        | around [POWER ] box       |
        |        [FAIL  ]           |
        |        [RESET ]           |
        +---------------------------+
                    |
                    |
                    V
        +---------------------------+
        | Clear power down test flag |
        +---------------------------+
                    |
                    |<-----------------------------------------------+
                    V                                                |
            /----------------\      N      +------------------------------------+
           /     "PAGE"        \---------->| Update current time (HH:MM:SS)     |
           \  key pressed   ?  /           | on line 2 of screen                |
            \----------------/             +------------------------------------+
                    |
                    | Y
                    V
              +-------+
            ' | Exit |
              +-------+
```

## Claims

1. Processing apparatus having a display means (11) and a processing capability said processing capability including a test facility for carrying out an internal test on a component or components of the apparatus characterised in that the test facility provides one or more test sequences for testing components of the apparatus and the display means is being capable of displaying one or more component layouts whereby defective components identified by a said test sequence can be indicated on said display means.

2. Apparatus according to claim 1 characterised in that a faulty component is represented on the display (11) by a different display mode to that of the remainder of the display.

3. Apparatus according to claim 1 or claim 2 characterised in that components which have been tested and passed the test are highlighted visually on the display (11).

4. Apparatus according to any preceding claim characterised in that the test sequence is arranged to test components in a predetermined priority order.

5. Apparatus according to any preceding claim, characterised in that components under test are displayed on said display (11) at positions corresponding substantially to their physical location on a circuit board.

6. Apparatus according to any one of claims 2 to 5 characterised in that components which have passed a test are represented on the display (11) by an area or areas of steady inverse video and components which have failed a test are represented by an area or areas of flashing inverse video.

**FIG.1**

FIG.2

```
POWER HAS CYCLED
---------------------------------------------

                  INDEX
                                          Page
Normal Operation..........................1
Stored panels & Keyboard lock ............2
Data Logging .............................3
Date and Time.............................4
Remote Configuration .....................5
Instrument ID ...........................6
User confidence tests.................%7
```

## FIG.3

```
          USER CONFIDENCE SELF TESTS

   To  select  all  tests  press  the  "EXEC"  key

   To  select  a  specific  test  press  "NEXT"

   Ensure  that  there  is  nothing  connected  to
   the  DSX-1/1C  and  DSX-0  transmit  and
   receive  front  panel  interfaces.

   Front  panel  DS0  clocks  are  required  for
   the  DS0  interface  test.

   The  loopback  test  connector  is  required
   for  the  RS232  and  Protocol  Analyser  port
   tests.
```

## FIG.4

0 283 610

```
%EXEC starts tests.
 PAGE leaves tests.

+------------------------------------ [RS232 ]--+
| [POWER ] 22-[RAM]   [DSO ]-23         36 |
33-[FAIL  ]21b-[ROM]  [CPU ]      [JITTER ] |
| [RESET ]21a [ROM]   [RAM]-25          |
|                      [ROM]-24 [PROTOC ]37 |
|32-[RTC]  20[CTL]        26|ANALYS |
|           [CPU]  [DS1C]-  | PLLS  ]-39
| [ CRT  ]31    40[DS1 ]-27[LEVEL ] |
|_[CONTRL ]-  [UPI]-[PGA ]-  [DETECT ]29|
+-------+|             28
| | | ||  [DS1/1C   TX  RX  INTERFACE] |
| / \ ||                          30 |
|/ CRT \ ||  [DSO  TX  RX  CLK  INTERFACE] |
|/    \ ||                          |
|_____||  [KBD] _____ [PRNTER ] _|
    34       35
```

← —inverse video

**FIG.5**

```
EXEC stops tests.

Pass = ### Fail = ##   CONTROL  CPU  TEST
+------------------------------------ [RS232 ]--+
| [POWER ]   [RAM]   [DSO ]              |
| [FAIL  ]   [ROM]   [CPU ]   [JITTER ] |
| [RESET ]   [ROM]   [RAM]              |
|                    [ROM]    [PROTOC ] |
| [RTC ]  %[CTL]              |ANALYS | |
|          [CPU]   [DS1C ]    [ PLLS  ] |
| [ CRT  ]         [DS1 ]     [LEVEL ] |
|_[CONTRL ]_  [UPI ]  [PGA ]   [DETECT ] |
+-------+|
| | | ||  [DS1/1C   TX  RX  INTERFACE] |
| / \ ||                          |
|/ CRT \ ||  [DSO  TX  RX  CLK  INTERFACE] |
|/    \ ||                          |
|_____||  [KBD] _____ [PRNTER ] _|
```

← —inverse video

**FIG.6**

```
+-------------------------------------------------+
| EXEC  continues  tests.                          |   ←--inverse video
| Apply  loopback jumper to RS232 port.            |   ←--inverse video
| PAGE  leaves tests.   RS232 LOOPBACK TEST        |
|   +-------------------------%[RS232 ]--+          |
|   | [POWER ]   *[RAM]* [DSO ]          |          |
|   | [FAIL  ]   *[ROM]* [CPU ]    [JITTER ] |      |
|   | [RESET ]   *[ROM]* [RAM]          |          |
|   |                    [ROM]     [PROTOC ] |      |
|   |    *[RTC]* *[CTL]*           |ANALYS | |      |
|   |            *[CPU]* [DS1C ]   [ PLLS  ] |      |
|   |*[ CRT  ]*          [DS1  ]   [LEVEL  ] |      |
|   |*[CONTRL ]* *[UPI]* [PGA  ]   [DETECT ] |      |
|   +---------+|                           |        |
|   | |   |  ||  [DS1/1C  TX  RX  INTERFACE] |      |
|   | /   \  ||                             |        |
|   |/ CRT \ ||  [DSO TX  RX  CLK  INTERFACE] |     |
|   |/     \||                             |        |
|   |_____||*[KBD]*_____*[PRNTER]*_|           |
+-------------------------------------------------+
```

## FIG.7

```
+-------------------------------------------------+
| PAGE  leaves  tests.                             |   ←--inverse video
| Cycle power on instrument.      hh:mm:ss          |
| Pass=### Fail=  ##   POWER  FAIL / RESET          |
|   +------------------------ [RS232 ]--+           |
|   | [POWER ]   [RAM]  [DSO ]          |           |
|   | [FAIL  ]   [ROM]  [CPU ]   [JITTER ] |        |
|   | [RESET ]   [ROM]  [RAM]           |           |
|   |            [ROM]          [PROTOC ] |         |
|   |    [RTC]   [CTL]          |ANALYS | |         |
|   |            [CPU]  [DS1C ]  [ PLLS  ] |        |
|   | [ CRT  ]          [DS1  ]  [LEVEL  ] |        |
|   |_[CONTRL ]_ [UPI ] [PGA  ]  [DETECT ] |        |
|   +---------+|                          |         |
|   | |   |  ||  [DS1/1C  TX  RX  INTERFACE] |      |
|   | /   \  ||                            |         |
|   |/ CRT \ ||  [DSO TX  RX  CLK  INTERFACE] |     |
|   |/     \||                            |         |
|   |_____|| [KBD] _____ [PRNTER ] _|          |
+-------------------------------------------------+
```

## FIG.8

```
PAGE  leaves  tests.
Powered  off  at  hh : mm : ss.        HH : MM : SS
Pass = ### Fail=  ##      ***END  OF  TESTS***
+ - - - - - - - - - - - - - - - - - - - - - [RS232  ]--+
|  [POWER ]    [RAM]   [DSO ]                        |
|  [FAIL    ]   [ROM]   [CPU ]          [JITTER ]    |
|  [RESET  ]   [ROM]   [RAM]                         |
|                       [ROM ]          [PROTOC ]    |
|     [RTC ]    [ CTL ]                  |ANALYS |    |
|               [ CPU]   [DS1C ]         [ PLLS  ]    |
|   [ CRT   ]            [DS1  ]         [LEVEL  ]    |
|__ [CONTRL ]_  [ UPI ]  [PGA  ]         [DETECT ]    |
|+ - - - - - - - - +|                                 |
| |    |    | | |  [DS1/ 1C   TX  RX  INTERFACE]     |
| |  /  CRT  \ | |  [DSO TX RX  CLK  INTERFACE]       |
| |/        \| |                                     |
| |_____| | |  [KBD] _____    [PRNTER ] _|
```

## FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 199 273 (MINOLTA CAMERA K.K.) <br> * Abstract; page 2, line 14 - page 3, line 9; page 11, line 2 - page 13, line 2; figures 1a-1b,2-4 * | 1 | G 06 F 11/22 <br> G 06 F 11/32 |
| Y | | 2-4,6 | |
| Y | IEEE AUTOTESTCON '81 PROCEEDINGS, Orlando, Florida, 19th-21st October 1981, pages 140-148, IEEE, New York, US; V. MONIE: "Color graphics in ATE" <br> * Page 141, left-hand column, lines 1-14; page 142, right-hand column, lines 38-46 * | 2-4,6 | |
| X | EP-A-0 121 570 (FANUC LTD) <br> * Abstract; page 2, line 21 - page 3, line 10; page 9, line 23 - page 12, line 5; figures 1,3 * | 1,4 | TECHNICAL FIELDS SEARCHED (Int. Cl.4) <br><br> G 06 F |
| Y | | 2,3,5,6 | |
| Y | EP-A-0 138 535 (BRITISH TELECOMMUNICATIONS PLC) <br> * Abstract; page 2, lines 25-35 * | 2,3,5,6 | |
| | ---    -/- | | |

The present search report has been drawn up for all claims

| Place of search | Date of completion of the search | Examiner |
|---|---|---|
| THE HAGUE | 25-09-1987 | WEBER, V.G.E. |

| | **DOCUMENTS CONSIDERED TO BE RELEVANT** | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | SIEMENS FORSCHUNGS- UND ENTWICKLUNGSBERICHTE, vol. 12, no. 1, 1983, pages 47-54, Springer Verlag, Würzburg, DE; P.P. FASANG: "Microbit, a method of built-in test for microcomputers" * Page 49, left-hand column, lines 28-45; page 50, left-hand column, line 4 - page 54, left-hand column, line 3; figures 2-10 * | 1,4 | |
| E | US-A-4 654 852 (IBM) * Abstract; column 1, line 59 - column 2, line 21; figures 2.24,2.25,3; claim 1 * | 1,4 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 25-09-1987 | WEBER, V.G.E. |